# EUROPÄISCHE PATENTSCHRIFT

(11) **EP 2 663 791 B1**
(45) Veröffentlichungstag und Bekanntmachung des Hinweises auf die Patenterteilung: **26.08.2015**
(21) Anmeldenummer: 12713650.5
(22) Anmeldetag: 26.03.2012
(51) Int. Cl.: F16J 15/34, F16J 15/40

(54) **WELLENDICHTUNGSEINSATZ**
SHAFT SEAL INSERT
PIÈCE D'INSERTION POUR GARNITURE D'ÉTANCHÉITÉ D'ARBRE

(30) Priorität: 08.04.2011 DE 102011007071
(43) Veröffentlichungstag der Anmeldung: 20.11.2013
(73) Patentinhaber: Siemens Aktiengesellschaft, 80333 München (DE)
(72) Erfinder: MATEMAN, Gesinus, NL-7552 SH Hengelo (NL)
(86) Internationale Anmeldenummer: PCT/EP2012/055273
(87) Internationale Veröffentlichungsnummer: WO 2012/136496

(56) Entgegenhaltungen:
- EP-A1- 0 781 948
- EP-A1- 1 207 310
- EP-A1- 1 914 387
- DE-A1-102009 012 038
- DE-C1- 4 225 642
- US-B1- 6 325 382

## Beschreibung

Die Erfindung betrifft einen Wellendichtungseinsatz für eine Wellendichtung einer Turbomaschine, entsprechend dem Oberbegriff des Anspruchs 1.

Trockengasdichtungen sind als Wellendichtungen in Turbomaschinen, beispielsweise in Turbokompressoren, zunehmend beliebt. Trockengasdichtungen im Sinne der vorliegenden Erfindung sind Wellendichtungen, die mindestens zwei sich um die Welle in Umfangsrichtung (bezogen auf die Rotationsachse) erstreckende Dichtelemente aufweisen, die jeweils mindestens eine zu dem gegenüberliegenden Dichtelement weisende Dichtfläche umfassen, mittels derer die Trockengasdichtung den Zwischenraum zwischen einem stationären Teil, beispielsweise einem Gehäuse und dem rotierenden Teil, insbesondere einer Welle, abdichtet. Eines der Dichtelemente rotiert mit dem rotierenden Teil und das andere Dichtelement ruht relativ zu dem Gehäuse. Mindestens eine der einander zugewendeten Dichtflächen weist Vorsprünge und/oder Ausnehmungen auf, welche in Zusammenwirkung mit einem Dichtgas für den Aufbau eines Gasfilms zwischen den beiden Dichtelementen an den Dichtflächen sorgen, so dass die Trockengasdichtung während der vorgesehenen Rotation berührungsfrei zwischen dem rotierenden Dichtelement und dem stehenden Dichtelement arbeitet. Die Trockengasdichtung erfordert ein sauberes Dichtungsgas, welches im Wesentlichen keine flüssigen Bestandteile aufweist um beschädigungsfrei bzw. berührungslos abzudichten. Die Ausnehmungen bzw. Vorsprünge können verschiedene Formen aufweisen und sind bevorzugt an nur einer Dichtungsfläche vorgesehen, bevorzugt an der Dichtungsfläche des rotierenden Dichtelementes. Ausnehmungen können U-förmig oder Tannenbaum-artig oder T-förmig oder in der Art einer Spirale ausgebildet sein, damit es zu einer Ausbildung eines stabilen Dichtungsfilmes des Dichtungsgases zwischen den beiden Dichtflächen kommt. Entscheidende Vorteile ergeben sich durch den Einsatz von Trockengasdichtungen beispielsweise an Verdichtern dadurch, dass die Leckage vergleichsweise gering ist und kein Schmieröl benötigt wird, wie beispielsweise bei Dichtungen, die mit Flüssigkeiten arbeiten oder im Vergleich zu einer Labyrinthdichtung. Regelmäßig werden Trockengasdichtungen auf einer Hochdruckseite mit einem Dichtungsgas beaufschlagt, wobei eine geringe Leckage dieses Dichtungsgases die Trockengasdichtung von der Hochdruckseite zu einer Seite niedrigeren Drucks - einer Niederdruckseite - passiert, wo in der Regel eine Ableitung dieser Leckage in eine sogenannte Vent-Leitung erfolgt. Auch um den Verbrauch an dem speziell aufbereiteten Dichtungsgas zu reduzieren, ist die Trockengasdichtung regelmäßig von anderen Wellendichtung umgeben, insbesondere auf der Hochdruckseite befindet sich regelmäßig eine Labyrinthdichtung, welche die Ausströmung des Dichtungsgases zu der von der Trockengasdichtung abgewendeten Seite hochdruckseitig reduziert. Der Hauptgrund für die serielle Zusatzdichtung, insbesondere Labyrinthdichtung, ist der Dichteffekt beim Versagen der Trockengasdichtung. Auch Trockengasdichtungen, die eine Dichtungsgasversorgung als zentrale Zuleitung der Dichtflächen aufweisen, sind in der Regel mittels einer seriellen Zusatzdichtung, insbesondere Labyrinthdichtung gegen Verunreinigung geschützt. Auf der Hochdruckseite der Trockengasdichtung ist in der Regel ein Prozessgas, das in dem Fall eines Turboverdichters unter einem Betriebsdruck steht. Das Dichtungsgas muss gegenüber diesem Prozessgas einen Überdruck aufweisen, um das potentiell verschmutzte Prozessgas von der empfindlichen Trockengasdichtung fern zu halten.

Aus der gattungsgemäßen DE 10 2009 012 038 A1, der DE 42 25 642 C1, der EP 0 781 948 A1, der EP 1 207 310 A1, der EP 1 914 387 A1 und der US 6 325 382 B1 ist jeweils bereits eine Anordnung mit einer Trockengasdichtung und einer Labyrinthdichtung bekannt, bei der jedoch ein erhöhter Montageaufwand gegeben ist aufgrund der modularen Trennung der Labyrinthdichtung von der Trockengasdichtung. Die Fertigung und die Montage dieser beiden Module erfordert eine erhöhte Genauigkeit, weil Anforderungen an moderne Maschinenwirkungsgrade enge Radialspiele der Labyrinthdichtung und eine präzise Anordnung der Trockengasdichtung erfordern.

Ausgehend von dem beschriebenen Stand der Technik hat es sich die Erfindung zur Aufgabe gemacht, die Komplexität einer Turbomaschine, die einen Wellendichtungseinsatz der eingangs beschriebenen Art aufweist zu reduzieren, die Montage einer derartigen Turbomaschine zu vereinfachen und die Raumanforderung des Wellendichtungseinsatzes zu verringen.

Eine Lösung für diese Aufgabe bietet die Erfindung mit einem Wellendichtungseinsatz der eingangs definierten Art mit den zusätzlichen Merkmalen des kennzeichnenden Teils des Anspruchs 1. Die Unteransprüche beinhalten vorteilhafte Weiterbildungen der Erfindung.

In der Begriffswelt der Erfindung ist die Rotationsachse eine zentrale Achse des Wellendichtungseinsatzes, die als Rotationsachse bezeichnet ist, da es sich bei der Trockengasdichtung des Wellendichtungseinsatzes um eine Wellendichtung handelt, die naturgemäß eine in einem Betrieb rotierende Welle umgibt. Sämtliche ohne weitere Erläuterung auf die Begriffswelt einer Kreisbewegung bezogenen Angaben - beispielsweise axial, radial, Umfangsrichtung, Durchmesser - beziehen sich auf die Rotationsachse als Zentrum einer Kreisbewegung.

Die Begriffswelt unterscheidet weiterhin zwei grundlegend verschiedene Dichtungstypen, nämlich die Wellendichtung, die zwei relativ zueinander in Bewegung befindliche Bauteile zueinander abdichtet und die stationäre Dichtung, welche zwei relativ zueinander in Ruhe befindliche Bauteile zueinander abdichtet.

Mit Bezug auf die erfindungsgemäße Wellendichtung werden die Begriffe Hochdruckseite und Niederdruckseite benutzt, was daraufhin deutet, dass die Wellendichtung gegen eine Druckdifferenz ein Überströmen eines Fluides von einer Seite höherem Druckes auf eine Seite niedrigeren Druckes verhindert und dementsprechend die Druckdifferenz aufrecht erhält.

Das bereits eingangs erwähnte Statorteil ist als stehendes Bauteil zu verstehen, welches Träger von Bauteilen zumindest der Trockengasdichtung des Wellendichtungseinsatzes ist. Das Statorteil ist derart ausgebildet, dass es in eine Ausnehmung eines Stators einsetzbar ist, welcher Stator bevorzugt als Gehäuse der Turbomaschine ausgebildet ist. Hierbei kann es sich auch um mit dem Gehäuse verbundene Bauteile handeln, so dass eine indirekte Verbindung des Statorteils mit einem Gehäuse einer Turbomaschine vorgesehen ist. Jedenfalls ist das Statorteil dazu geeignet, die Bauelemente des Wellendichtungseinsatzes in einer Einheit zusammenzufassen, so dass es sich bei dem Wellendichtungseinsatz um ein für sich bewegliches Modul handelt, das im Rahmen der Montage als Ganzes an der Welle eines Rotors anbringbar ist. Bevorzugt wird der erfindungsgemäße Wellendichtungseinsatz zunächst an der Welle angebracht und anschließend gemeinsam mit der Welle in beispielsweise ein Topfgehäuse eingelegt oder in eine untere Gehäusehälfte eingelegt und in dem Gehäuse befestigt.

Der erfindungsgemäßen Ausbildung des stehenden Labyrinthdichtungsteils und des rotierenden Labyrinthdichtungsteils als Teile des Statorteils bzw. des Rotorteils ist derart zu verstehen, dass auch ein zumindest teilweise einstückige Ausbildung dieser jeweils beiden Bauelemente umfasst ist. Unter der erfindungsgemäßen festen Anbringung der Labyrinthdichtungsteile an den Hülsen ist eine lösbare Befestigung zu verstehen, welches insbesondere alternativ zu der zumindest teilweisen einstückigen Ausbildung vorgesehen werden kann.

Besondere Vorteile ergeben sich durch den erfindungsgemäßen Wellendichtungseinsatz aufgrund der Reduktion der Komplexität in Folge der Verringerung der Teileanzahl einer Turbomaschine, da die an die Trockengasdichtung des Wellendichtungseinsatzes angrenzende Labyrinthdichtung nunmehr Bestandteil des Wellendichtungseinsatzes ist.

Besonders vorteilhaft ist die Erfindung für die Montage eines Topfverdichters (Barrel-Type-Casing), weil dort die Dichtungen mit der Welle gemeinsam in das Gehäuse eingelassen werden.

Der Vorteil des Vereinfachung ist auch im Rahmen der Montage signifikant, da die komplexen Ausrichtarbeiten eines Rotors zu dem Wellendichtungseinsatz und dem herkömmlich von diesem getrennt angeordneten Labyrinthdichtungseinsatz stark vereinfacht werden bzw. entfallen. Im Stand der Technik mussten schwierige und zeitaufwändige Ausrichtungen stattfinden, insbesondere der Bauteile Rotor, Trockengasdichtung, Labyrinthdichtung bzw. Gehäuse zueinander. Aufgrund der Kombination der Labyrinthdichtung mit der Trockengasdichtung in dem erfindungsgemäßen Wellendichtungseinsatz ist es darüber hinaus möglich, erfindungsgemäß den Bauraum einer Wellendichtung einer Turbomaschine zu verringern, insbesondere, weil die Labyrinthdichtung nicht mehr eine eigene Befestigung an dem Gehäuse erfordert, sondern diese mit dem Wellendichtungseinsatz direkt an dem Gehäuse befestigt ist. Dieses Bauraumersparnis führt insbesondere zu einem geringeren axialen Bauraumbedarf, welche Verringerung eine Reduktion der erforderlichen Länge der Welle des Rotors ermöglicht, wodurch sich entscheidende rotordynamische Vorteile ergeben, insbesondere Schwingungsamplituden geringer ausfallen und sich etwaige Resonanzfrequenzen in Folge der Versteifung vorteilhaft erhöhen. Bei ansonsten gleichen Betriebsparametern einer Turbomaschine ermöglicht dies eine Verringerung des Wellendurchmessers, so dass bei angenommenen gleichen Radialspielbedarf eine kleinere Fläche durch die Wellendichtung abzudichten ist, so dass eine nur geringere potentielle Leckagemenge entsteht und sich der Wirkungsgrad der Turbomaschine erhöht.

Sinnvoll ist die Anordnung der Labyrinthdichtung auf der Hochdruckseite als die axial äußerste Wellendichtung, so dass gewährleistet ist, dass keine Verunreinigungen von der Hochdruckseite ungehindert zur Trockengasdichtung des Wellendichtungseinsatzes gelangen können. Sinnvoll ist der Wellendichtungseinsatz an dem Statorteil mit einer zweiten stationären Dichtung versehen, so dass das Statorteil dichtend in einer Ausnehmung des Stators einsetzbar ist. Weiterhin ist zweckmäßig das Rotorteil mit einer stationären Dichtung versehen, so dass das Rotorteil dichtend auf die Welle eines Rotors anbringbar ist. Vorteilhaft kann die Welle des Rotors mit einem Absatz versehen sein, an dem das Rotorteil mit einer Kontaktfläche zur axialen Anlagen kommt. Bevorzugt handelt es sich bei den stationären Dichtungen zwischen der Welle und dem Rotorteil bzw. zwischen der Statorausnehmung und dem Statorteil um Dichtungen mit einem V-förmigen Querschnitt, welcher sich unter einer Druckdifferenz derart aufweitet, dass die Dichtwirkung unterstützt wird. Dieser Dichtungstyp wird als "PTFE Cup seal" und weist gute Widerstandsfähigkeiten auch gegen Druckschläge auf. Andere Dichtungen können auch verwendet werden, zum Beispiel elastomere O-Ring-Dichtungen.

Die Erfindung bezieht sich nicht nur auf einen Wellendichtungseinsatz, sondern auch auf eine Turbomaschine umfassend den Wellendichtungseinsatz, zumindest ein Gehäuse und einen Rotor mit einer Welle bzw. um eine Anordnung eines Wellendichtungseinsatzes der erfindungsgemäßen Art mit einem Rotor umfassend eine Welle und einen Stator, der den Rotor zumindest teilweise umgibt.

Besonders platzsparend ist eine Weiterbildung der erfindungsgemäßen Trockengasdichtung, bei der eine sich in Umfangsrichtung und Axialrichtung erstreckende Dichtfläche zwischen dem stehenden Labyrinthdichtungsteil und dem rotierenden Labyrinthdichtungsteil auf einem fünften Durchmesser koaxial zur Rotationsachse angeordnet ist, wobei der äußerste Durchmesser der Dichtflächen der Trockengasdichtung kleiner ist als der fünfte Durchmesser.

Eine derartige Weiterbildung wird bevorzugt bei Turbomaschinen eingesetzt, deren Geometrie und Betriebsparameter ansonsten, bei einem Versagen der Trockengasdichtung, eine für das Axiallager noch erträgliche Veränderung des Schubes auf den Rotor hervorruft.

Alternativ zu der zuvor erläuterten vorteilhaften Weiterbildung ist es zweckmäßig, wenn die sich in Umfangsrichtung und Axialrichtung erstreckende Dichtfläche zwischen dem stehenden Labyrinthdichtungsteil und dem rotierenden Labyrinthdichtungsteil auf dem fünften Durchmesser koaxial zur Rotationsachse im Wesentlichen identisch ist mit einem vierten Durchmesser, auf dem sich eine vierte stationäre Dichtung zwischen der Statorteil und dem stehenden Dichtelement der Trockengasdichtung befindet. Bevorzugt ist die Differenz zwischen dem vierten Durchmesser und dem fünften Durchmesser geringer als 10% des fünften Durchmessers. Auf diese Weise findet eine nur verhältnismäßig geringe Veränderung des Schubes auf eine Welle einer Turbomaschine statt, im Falle eines Defektes der Trockengasdichtung des erfindungsgemäßen Wellendichtungseinsatzes, da die Durchmesser, an denen die unterschiedlichen Drücke, die sich durch den Differenzdruck über die Trockengasdichtung unterscheiden, an dem Rotor anliegen bei einem Abbau über die Trockengasdichtung selbst nicht unterscheiden, zu dem Fall, dass der Differenzdruck über die angeschlossene Labyrinthdichtung abgebaut wird. Insbesondere bei einem Verdichter mit einer beabsichtigen Betriebsweise bei der die Trockengasdichtung eine Druckdifferenz von insbesondere über 200bar, abbaut im Normalbetriebszustand ist ein Axiallager in der Regel nicht in der Lage, die Schubveränderung zu ertragen, wenn die Trockengasdichtung einen Defekt hat und sich daraus eine Veränderung des Wellenschubes ergibt, sollte nicht das vorhergehend definierte Kriterium hinsichtlich der Durchmesser erfüllt sein.

Damit die Dichtelemente der Trockengasdichtung des Wellendichtungseinsatzes keine unnötig hohen Belastungen erfahren, die die erforderliche Geometrie für den Aufbau des die Berührungslosigkeit herstellenden Schmierfilms zwischen den Dichtflächen gewährleisten, ist es sinnvoll, wenn eine zweite stationäre Dichtung zwischen dem Rotorteil und dem stehenden Dichtelement auf einem dritten Durchmesser angeordnet ist und der dritte Durchmesser sich von dem vierten Durchmesser um nicht mehr als 10% des vierten Durchmessers unterscheidet.

Zweckmäßig weist eine vorteilhafte Weiterbildung der Erfindung eine Zuleitung eines Dichtungsgases zwischen der Labyrinthdichtung und der Trockengasdichtung des Wellendichtungseinsatzes in den axialen Zwischenraum auf, so dass die Labyrinthdichtung einen Austritt des aufbereiteten und reinen Dichtungsgases in Richtung der Hochdruckseite reduziert und die Trockengasdichtung nur mit dem reinen Dichtungsgas beaufschlagt wird. Zweckmäßig ist hierzu das Dichtungsgas gegenüber einem Prozessgas jenseitig der Labyrinthdichtung auf der Hochdruckseite in einem Überdruck, so dass kein Anteil des Prozessgases die Trockengasdichtung erreichen kann. Auf der Niederdruckseite der Trockengasdichtung ist zweckmäßig eine Dichtungsableitung vorgesehen, welche das reine Dichtungsgas ggf. als Gemisch mit einem auf der Niederdruckseite anstehenden anderen Gas einer Dichtungsgasaufbereitung zuleitet oder einer Abfackelung zuleitet.

Im Folgenden ist die Erfindung anhand von Ausführungsbeispielen unter Bezugnahme auf Zeichnungen näher erläutert, wobei sich dem Fachmann aus insbesondere beliebiger Kombination der Ansprüche von den Ausführungsbeispielen abweichende Möglichkeiten der Ausführung der Erfindung ergeben. Es zeigen:
Figur 1 einen Längsschnitt durch einen erfindungsgemäßen Wellendichtungseinsatz bevorzugt für Differenzdrücke unter 200bar und
Figur 2 einen Längsschnitt durch einen erfindungsgemäßen Wellendichtungseinsatz bevorzugt für Differenzdrücke über 200bar.

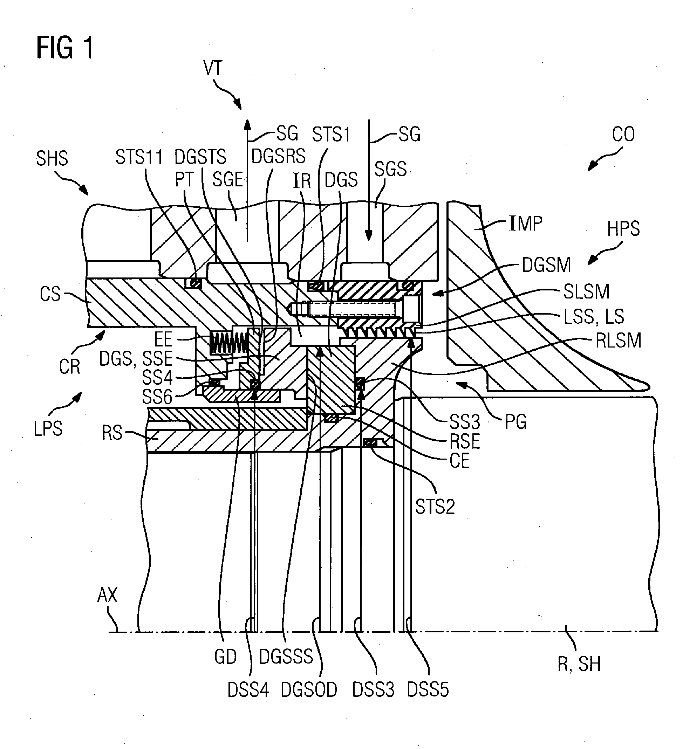

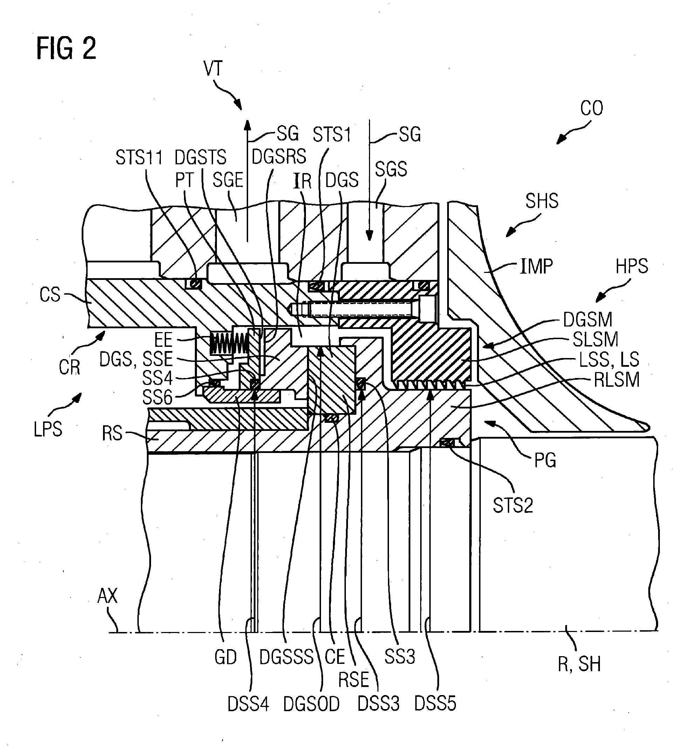

In der folgenden Beschreibung sind identische Bauelemente oder Bauelemente mit identischen Funktionen mit gleichem Bezugszeichen versehen. Ausdrücke, wie axial, radial, Umfangsrichtung, Durchmesser und Radius beziehen sich auf eine Rotationsachse AX, welche eine zentrale Achse eines erfindungsgemäßen Wellendichtungseinsatzes DGSM ist. Die in den Figuren 1 und 2 dargestellte Wellendichtungseinsatz DGSM umfasst ein Statorteil CS und ein Rotorteil RS sowie eine Trockengasdichtung DGS und eine Labyrinthdichtung LS. Das Rotorteil RS des Wellendichtungseinsatzes DGSM ist mittels einer zweiten statischen Dichtung STS2 auf einer Welle SH eines Rotors R dichtend angebracht. Die Welle SH ist gleichfalls Trägerin mindestens eines Laufrades einer Turbomaschine CO, die in nicht näher dargestellter Weise als Zentrifugalverdichter ausgebildet ist.

Das Statorteil CS ist mittels einer ersten stationären Dichtung STS1 dichtend in eine Statorausnehmung CR eingesetzt. Die erste stationäre Dichtung STS1 und die zweite stationäre Dichtung STS2 weisen ein V-Profil auf, welches in einer jeweiligen sich in Umfangsrichtung erstreckenden Dichtungsnut derart angeordnet ist, dass sich das V-Profil aufweitet, wenn von einer Hochdruckseite HPS eine Druckbeaufschlagung der stationären Dichtung erfolgt. Der Wellendichtungseinsatz DGSM weist eine Hochdruckseite HPS und eine Niederdruckseite LPS auf, wobei die Hochdruckseite HPS einem gegenüber der Niederdruckseite LPS unter Überdruck stehenden Prozessgas ausgesetzt ist. Das Statorteil ist gegenüber der Statorausnehmung CR zusätzlich mit einer statischen Dichtung STS11 abgedichtet. Der Wellendichtungseinsatz DGSM ist in den Figuren 1, 2 Bestandteil einer nicht in Gänze dargestellten Wellendichtung SHS.

Ein Zwischenraum IR zwischen dem Statorteil CS und dem Rotorteil RS ist mittels der Trockengasdichtung DGS einerseits und in serieller Anordnung dazu mit der Labyrinthdichtung LS andererseits abgedichtet. Die Trockengasdichtung DGS dient hierbei dem Abbau der Druckdifferenz DGS zwischen der Hochdruckseite HPS und der Niederdruckseite LPS. Zwischen der Trockengasdichtung DGS und der Labyrinthdichtung LS ist eine Dichtungsgaszuleitung SGS eines besonders reinen Dichtungsgases SG vorgesehen. Die Funktion der Labyrinthdichtung LS ist hierbei die Reduktion des Austrittes des Dichtungsgases SG in Richtung der Hochdruckseite bzw. in das potentiell verunreinigte und aggressive Prozessgas PG. Die Trockengasdichtung DGS wird daher hochdruckseitig nur mit dem sauberen und trockenen Dichtungsgas SG beaufschlagt, welches gegenüber dem Prozessgas PG einen Überdruck aufweist. Auf der Niederdruckseite LPS der Trockengasdichtung DGS ist eine Dichtungsableitung SGE der nur geringen Leckage der Trockengasdichtung DGS vorgesehen, welche in einen Vent oder eine Abfackelung bevorzugt mündet.

Die Trockengasdichtung DGS weist ein rotierendes Dichtelement RSE und ein stehendes Dichtelement SSE auf, die sich mit einer jeweiligen Dichtoberfläche an einer gemeinsamen Trockengasdichtungsdichtfläche DGSSS gegenüberstehen. Das rotierende Dichtelement RSE ist gegenüber dem Rotorteil RS mittels einer dritten stationären Dichtung SS3, die sich auf einem dritten Durchmesser DSS3 in Umfangsrichtung erstreckt, gegenüber dem Differenzdruck abgedichtet. Das Statorteil CS weist ein elastisches Element EE auf, welches mittels eines Kolbens PT das stehende Dichtelement SSE gegen das rotierende Dichtelement RSE vorspannt. Das stehende Dichtelement SSE ist gegenüber dem Führungsring GD mittels einer vierten stationären Dichtung SS4 auf einem vierten Durchmesser DSS4 gegen den Differenzdruck abgedichtet. In der Begriffswelt der Erfindung zählen das elastische Element EE und der Kolben PT sowie eine Führung GD zu dem Statorteil CS hinzu.

Die Labyrinthdichtung LS weist ein stehendes Labyrinthdichtungsteil SLSM und ein rotierendes Labyrinthdichtungsteil RLSM auf, die sich an einer sich axial und in Umfangsrichtung erstreckenden mittleren Labyrinthdichtungsfläche LSS einander gegenüber stehen, wobei sich die Labyrinthdichtungsfläche LSS in Umfangsrichtung auf einem fünften Durchmesser DSS5 erstreckt.

Unter der mittleren Labyrinthdichtungsfläche ist eine Fläche zu verstehen, welche sich axial und in Umfangsrichtung entlang des fünften Durchmessers DSS5 erstreckt, wobei der fünfte Durchmesser das Ergebnis einer Kreisflächen-gewichteten Mittelung ist von dem hochdruckseitigen äußeren Durchmesser, dem hochdruckseitigen inneren Durchmesser, dem niederdruckseitigen äußeren Durchmesser, dem niederdruckseitigen inneren Durchmesser der Öffnung der Labyrinthdichtung LS.

Das rotierende Dichtelement RSE steht dem stehenden Dichtelement SSE an der Trockengasdichtungsfläche DGSSS mit einer rotierenden Dichtfläche DGSRS gegenüber, welche mit Vorsprüngen und Ausnehmungen versehen ist, die bevorzugt keilförmig und/oder spiralförmig sind. Das stehende Dichtelement SSE weist an einer stehenden Dichtungsfläche DGSTS, die der Trockengasdichtungsdichtfläche DGSS zugewendet ist eine speziell ausgebildete Oberfläche auf. Die Ausbildung der Oberfläche ist der gegenüberliegenden rotierenden Dichtfläche DGSRS derart angepasst, dass ein berührungsloser Betrieb der Trockengasdichtung DGS unter Ausbildung eines entsprechenden Schmierfilms des Dichtungsgases SG gewährleistet ist.

Die Figur 1 zeigt eine besonders platzsparende Ausbildung des Wellendichtungseinsatzes DGSM, bei dem der fünfte Durchmesser DSS5 größer ist als ein äußerster Außendurchmesser der Dichtflächen DGSOD der Trockengasdichtung DGS, so dass eine axiale Überlappung zumindest teilweise zwischen der Labyrinthdichtung LS und Bauteilen der Trockengasdichtung DGS möglich ist. Im konkreten Beispiel der Figur 1 überschneidet sich die Labyrinthdichtung LS axial mit dem rotierenden Dichtelement RSE der Trockengasdichtung DGS.

Die Figur 2 zeigt eine Ausbildung, welche insbesondere für die Hochdruckanwendung bei Differenzdrücken von über 200bar geeignet ist. Hier befindet sich die Labyrinthdichtungsfläche LSS auf einem im Wesentlichen identischen Durchmesser, wie die vierte stationäre Dichtung SS4 zwischen dem Rotorteil RS und dem rotierenden Dichtelement RSE. Die Differenz zwischen dem fünften Durchmesser DSS5 und dem vierten Durchmesser DSS4 ist kleiner als 10% des fünften Durchmessers DSS5. Weiterhin ist zur Minimierung von mechanischer Belastung auf die Dichtelemente der Trockengasdichtung DGS die Differenz zwischen dem dritten Durchmesser DSS3 und dem vierten Durchmesser DSS4 geringer als 10% von dem vierten Durchmesser DSS5.

## Patentansprüche

1. Wellendichtungseinsatz (DGSM) für eine Wellendichtung (SHS) einer Turbomaschine (CO), die sich in einer axialen Richtung entlang einer Rotationsachse (AX) erstreckt, umfassend
- ein Rotorteil (RS), das derart ausgebildet ist, dass es auf einer Welle (SH) eines sich entlang der Rotationsachse (AX) erstreckenden Rotors (R) anbringbar ist,
- ein Statorteil (CS), das derart ausgebildet ist, dass es in eine Statorausnehmung (CR) einsetzbar ist,
- umfassend mindestens eine Trockengasdichtung (DGS), welche ein an dem Rotorteil (RS) angebrachtes rotierendes Dichtelement (RSE) und ein an dem Statorteil (CS) angebrachtes stehendes Dichtelement (SSE) aufweist zum Abdichten eines Zwischenraums (IR) zwischen dem rotierenden Dichtelement (RSE) und dem stehenden Dichtelement (SSE), wobei das stehende Dichtelement (SSE) und das rotierende Dichtelement (RSE) an einer sich radial und in Umfangsrichtung erstreckenden Dichtfläche einander gegenüberliegend angeordnet sind, wobei der Wellendichtungseinsatz (DGSM) an einem axialen Ende eine Hochdruckseite (HPS) und an dem anderen axialen Ende eine Niederdruckseite (LPS) aufweist,
wobei auf der Hochdruckseite (HPS) eine Labyrinthdichtung (LS) zur Abdichtung des Zwischenraums (IR) in serieller Anordnung zu der Trockengasdichtung (DGS) vorgesehen ist,
wobei die Labyrinthdichtung (LSS) die axial äußerste Dichtung des Wellendichtungseinsatzes (DGSM) auf der Hochdruckseite (HPS) ist,
wobei das Statorteil (CS), mit einer ersten stationären Dichtung (STS1) auf einem ersten Dichtungsdurchmesser (DSS1) derart ausgebildet ist, dass das Statorteil (CS) in die Statorausnehmung (CR) dichtend einsetzbar ist und das Rotorteil (RS), mit einer zweiten stationären Dichtung (STS2) auf einem zweiten Dichtungsdurchmesser (DSS2) derart ausgebildet ist, dass es auf der Welle (SH) dichtend anbringbar ist
**dadurch gekennzeichnet, dass** die Labyrinthdichtung (LSS) einen stehenden Labyrinthdichtungsteil (SLSM) und einen rotierenden Labyrinthdichtungsteil (RLSM) umfasst, wobei der stehende Labyrinthdichtungsteil (SLSM) ein Teil des Statorteils (CS) ist oder an diesem fest angebracht ist und
wobei der rotierende Labyrinthdichtungsteil (RLSM) ein Teil des Rotorteils (RS) ist oder an diesem fest angebracht ist.

2. Wellendichtungseinsatz (DGSM) nach Anspruch 1,
wobei eine sich in Umfangsrichtung und Axialrichtung erstreckende mittlere Labyrinthdichtungsfläche (LSS) zwischen den stehenden Labyrinthdichtungsteil (SLSM) und dem rotierenden Labyrinthdichtungsteil (RLSM) auf einem fünften Durchmesser (DSS5) koaxial zur Rotationsachse (AX) angeordnet ist, wobei der äußerste Durchmesser der Dichtflächen (DGSOD) der Trockengasdichtung (DGS) kleiner ist als der fünfte Durchmesser (DSS5).

3. Wellendichtungseinsatz (DGSM) nach Anspruch 1,
wobei
eine sich in Umfangsrichtung und Axialrichtung erstreckende mittlere Labyrinthdichtungsfläche (LSS) zwischen dem stehenden Labyrinthdichtungsteil (SLSM) und dem rotierenden Labyrinthdichtungsteil (RLSM) auf einem fünften Durchmesser (DSS5) koaxial zur Rotationsachse (AX) angeordnet ist und
zwischen dem stehenden Dichtelement (SSE) und der Statorteil (CS) eine vierte stationäre Dichtung (SS4) auf einem vierten Durchmesser (DSS4) angeordnet ist,
**dadurch gekennzeichnet, dass**
der Betrag der Differenz zwischen dem vierten Durchmesser (DSS4) und dem fünften Durchmesser (DSS5) geringer als 10% des fünften Durchmessers ist (DSS5).

4. Wellendichtungseinsatz (DGSM) nach einem der Ansprüche 1 bis 3,
wobei der Zwischenraum (IR) axial zwischen der Labyrinthdichtung (LS) und der Trockengasdichtung (DGS) eine Dichtungsgaszuleitung (SGS) aufweist zur Zuleitung eines Dichtungsgases (SG) zwischen die Labyrinthdichtung (LS) und die Trockengasdichtung (DGS),
wobei der Wellendichtungseinsatz (DGSM)auf der der Niederdruckseite (LPS) zugewendeten Seite der Trockengasdichtung (DGS) eine Dichtungsgasableitung (SGE) aufweist zur Ableitung von Dichtungsgas (SG), welches die Trockengasdichtung (DGS) passiert hat.

## Claims

1. Shaft seal insert (DGSM) for a shaft seal (SHS) of a turbomachine (CO), which extends in an axial direction along an axis of rotation (AX), comprising
- a rotor part (RS) which is configured such that it can be mounted on a shaft (SH) of a rotor (R) which extends along the axis of rotation (AX),
- a stator part (CS) which is configured such that it can be inserted into a stator recess (CR),
- at least one dry gas seal (DGS) having a rotating sealing element (RSE) mounted on the rotor part (RS) and one static sealing element (SSE) mounted on the stator part (CS) in order to seal an intermediate space (IR) between the rotating sealing element (RSE) and the static sealing element (SSE), wherein the static sealing element (SSE) and the rotating sealing element (RSE) are arranged facing each other on a sealing surface which extends radially and in the circumferential direction, wherein the shaft seal insert (DGSM) has a high-pressure side (HPS) at one axial end and a low-pressure side (LPS) at the other axial end,
wherein a labyrinth seal (LS) for sealing the intermediate space (IR) is provided on the high-pressure side (HPS) in a serial arrangement with the dry gas seal (DGS),
wherein the labyrinth seal (LSS) is the axially outermost seal of the shaft seal insert (DGSM) on the high-pressure side (HPS),
wherein the stator part (CS) having a first static seal (STS1) on a first sealing diameter (DSS1) is configured such that the stator part (CS) can be inserted in a sealing manner into the stator recess (CR) and
the rotor part (RS) having a second static seal (STS2) at a second sealing diameter (DSS2) is configured such that it can be mounted in a sealing manner on the shaft (SH), **characterized in that** the labyrinth seal (LSS) comprises a static labyrinth seal part (SLSM) and a rotating labyrinth seal part (RLSM), wherein the static labyrinth seal part (SLSM) is either part of, or is securely mounted on, the stator part (CS), and
wherein the rotating labyrinth seal part (RLSM) is either part of, or is securely mounted on, the rotor part (RS).

2. Shaft seal insert (DGSM) according to Claim 1,
wherein a middle labyrinth sealing surface (LSS), which extends in the circumferential direction and in the axial direction, between the static labyrinth seal part (SLSM) and the rotating labyrinth seal part (RLSM) is arranged coaxially with the axis of rotation (AX) at a fifth diameter (DSS5), wherein the outermost diameter of the sealing surfaces (DGSOD) of the dry gas seal (DGS) is smaller than the fifth diameter (DSS5).

3. Shaft seal insert (DGSM) according to Claim 1, wherein
a middle labyrinth sealing surface (LSS), which extends in the circumferential direction and in the axial direction, between the static labyrinth seal part (SLSM) and the rotating labyrinth seal part (RLSM) is arranged coaxially with the axis of rotation (AX) at a fifth diameter (DSS5), and
a fourth static seal (SS4) is arranged between the static sealing element (SSE) and the stator part (CS) at a fourth diameter (DSS4)
**characterized in that**
the magnitude of the difference between the fourth diameter (DSS4) and the fifth diameter (DSS5) is less than 10% of the fifth diameter (DSS5).

4. Shaft seal insert (DGSM) according to one of Claims 1 to 3,
wherein the intermediate space (IR) has, between the labyrinth seal (LS) and the dry gas seal (DGS) as seen in the axial direction, a sealing gas supply line (SGS) for supplying a sealing gas (SG) between the labyrinth seal (LS) and the dry gas seal (DGS),
wherein the shaft seal insert (DGSM) has, on the side of the dry gas seal (DGS) which faces the low-pressure side (LPS), a sealing gas evacuation line (SGE) for evacuating sealing gas (SG) which has passed through the dry gas seal (DGS).

## Revendications

1. Pièce (DGSM) d'insertion d'une étanchéité d'arbre pour une étanchéité (SHS) d'arbre d'une turbomachine (CO), qui s'étend dans une direction axiale suivant un axe (AX) de rotation, comprenant
- une partie (RS) rotorique constituée de manière à pouvoir être mise sur un arbre (SH) d'un rotor (R) s'étendant suivant l'axe (AX) de rotation,
- une partie (CS) statorique constituée de manière à pouvoir être mise dans un évidement (CR) de stator,
- comprenant au moins une étanchéité (DGS) au gaz sec, qui a un élément (RSE) d'étanchéité tournant mis sur la partie (RS) rotorique et un élément (SSE) d'étanchéité fixe mis sur la partie (CS) statorique pour rendre étanche un espace (IR) intermédiaire entre l'élément (RSE) d'étanchéité tournant et l'élément (SSE) d'étanchéité fixe, l'élément (SSE) d'étanchéité fixe et l'élément (RSE) d'étanchéité tournant étant disposés en opposition l'un à l'autre sur une surface d'étanchéité s'étendant radialement et dans la direction périphérique, la pièce (DGSM) d'insertion d'étanchéité d'arbre ayant à une extrémité axiale un côté (HPS) de haute pression, et à l'autre extrémité axiale, un côté (LPS) de basse pression,
dans lequel il est prévu du côté (HPS) de haute pression une étanchéité (LS) en labyrinthe pour rendre étanche l'espace (IR) intermédiaire suivant un agencement en série avec l'étanchéité (DGS) au gaz sec.
L'étanchéité (LSS) en labyrinthe étant l'étanchéité la plus à l'extérieur axialement de la pièce (DGSM) d'insertion d'étanchéité d'arbre du côté (HPS) de haute pression,
la partie (CS) statorique étant constituée en ayant une première étanchéité (STS1) fixe sur un premier diamètre (DSS1) d'étanchéité de manière à ce que la partie (CS) statorique puisse être mise avec étanchéité dans l'évidement (CR) de stator et la partie (RS) rotorique étant constituée en ayant une deuxième étanchéité (STS2) fixe sur un deuxième diamètre (DSS2) d'étanchéité de manière à pouvoir être mise de manière étanche sur l'arbre (SH), **caractérisée en ce que**
l'étanchéité (LSS) en labyrinthe comprend une partie (SLSM) fixe d'étanchéité en labyrinthe et une partie (RLSM) tournante d'étanchéité en labyrinthe, la partie (SLSM) fixe d'étanchéité en labyrinthe étant une partie de la partie (CS) statorique ou étant mise fixement sur celle-ci et
dans laquelle la partie (RLSM) tournante d'étanchéité en labyrinthe est une partie de la partie (RS) rotorique ou est mise de manière fixe sur celle-ci.

2. Pièce (DGSM) d'insertion d'étanchéité d'arbre suivant la revendication 1,
dans laquelle une surface (LSS) d'étanchéité en labyrinthe médiane s'étendant dans la direction périphérique et dans la direction axiale entre la partie (SLSM) fixe d'étanchéité en labyrinthe et la partie (RLSM) tournante d'étanchéité en labyrinthe est disposée sur un cinquième diamètre (DSS5) coaxialement à l'axe (AX) de rotation, le diamètre le plus extérieur des surfaces (DGSOD) d'étanchéité de l'étanchéité (DGS) au gaz sec étant plus petit que le cinquième diamètre (DSS5).

3. Pièce (DGSM) d'insertion d'étanchéité d'arbre suivant la revendication 1,
dans laquelle
une surface (LSS) d'étanchéité en labyrinthe médiane s'étendant dans la direction périphérique et dans la direction axiale entre la partie (SLSM) fixe d'étanchéité en labyrinthe et la partie (RLSM) tournante d'étanchéité en labyrinthe est mise sur un cinquième diamètre (DSS5) coaxialement à l'axe (AX) de rotation et
entre l'élément (SSE) d'étanchéité fixe et la partie (CS) statorique une quatrième étanchéité (SS4) fixe est mise sur un quatrième diamètre (DSS4),
**caractérisée en ce que**
la différence entre le quatrième diamètre (DSS4) et le cinquième diamètre (DSS5) est plus petite que 10 % du cinquième diamètre (DSS5).

4. Pièce (DGSM) d'insertion d'étanchéité d'arbre suivant l'une des revendications 1 à 3,
dans laquelle l'espace (IR) intermédiaire a axialement entre l'étanchéité (LS) en labyrinthe et l'étanchéité (DGS) au gaz sec un conduit (SGS) d'apport de gaz d'étanchéité pour apporter un gaz (SG) d'étanchéité entre l'étanchéité (LS) en labyrinthe et l'étanchéité (DGS) au gaz sec,
la pièce (DGSM) d'insertion d'étanchéité d'arbre, ayant du côté tourné vers le côté (LPS) de basse pression de l'étanchéité (DGS) au gaz sec, un conduit (SGE) d'évacuation du gaz d'étanchéité pour évacuer du gaz (SG) d'étanchéité, qui a passé l'étanchéité (DGS) au gaz sec.
